# EUROPEAN PATENT SPECIFICATION

(11) **EP 2 680 127 B1**
(45) Date of publication and mention of the grant of the patent: **24.04.2019**
(21) Application number: 13174126.6
(22) Date of filing: 27.06.2013
(51) Int. Cl.: G06F 3/12

(54) **Image forming system and method in which client apparatuses are notified via print server of event generated in image forming apparatus**
Bilderzeugungssystem und Verfahren, mit dem Client-Geräte via Druckserver über in einer Bilderzeugungsvorrichtung aufgetretene Ereignisse benachrichtigt werden
Système de formation d'image et procédé dans lequel des appareils clients sont avisés par serveur d'impression d'événement généré dans un appareil de formation d'image

(30) Priority: 29.06.2012 JP 2012146203; 29.06.2012 JP 2012146204; 25.06.2013 US 201313926086
(43) Date of publication of application: 01.01.2014
(73) Proprietor: Kyocera Document Solutions Inc., Chuo-ku Osaka 540-8585 (JP)
(72) Inventor: Oguma, Takashi, Osaka 540-8585 (JP); Taira, Yoshiyuki, Osaka 540-8585 (JP); Asano, Takehiko, Osaka 540-8585 (JP)
(74) Representative: Fox-Male, Nicholas Vincent Humbert

(56) References cited:
- JP-A- 2005 071 302
- JP-A- 2005 107 837
- US-A1- 2004 190 050
- US-A1- 2009 190 166

## Description

### FIELD

The present disclosure relates to an image forming system and an image forming method in which a client apparatus is notified via a print server of an event generated in an image forming apparatus.

### BACKGROUND

In a typical image forming system in which an image forming apparatus is shared by a plurality of client apparatuses using a print server connected to a network, when an error is generated in the image forming apparatus, the print server notifies each client apparatus of the content of the error. As a result, a user of each client apparatus can know of the status of the image forming apparatus. US2004/0190050 and US2009/0190166 each disclose such a printing system.

Since the print server notifies each client of status changes of the statuses of jobs, the amount of communication traffic on the network is increased. Usually, it suffices for each user to know of a status change in his/her job.

### SUMMARY

The present invention provides a system as defined in claim 1. The system may include the features of any one or more of dependent claims 2 to 8.

The present invention also provides a method as defined in claim 9. The method may include the features of any one or more of dependent claims 10 to 16.

The present disclosure relates to an image forming system and an image forming method that cause the amount of traffic on a network to be reduced by omitting unnecessary event notifications transmitted from a print server to each client apparatus.

An image forming system according to an embodiment of the present disclosure includes a client apparatus, a print server and an image forming apparatus, each of which are coupled to a network.

The client apparatus includes a status monitor, a printer driver, and a client-side notification service. The printer driver is configured to i) convert document data into print job data, ii) generate a job ID of the print job data, iii) provide the job ID to a client-side notification service of the client apparatus, and iv) transmit the print job data to the image forming apparatus via the print server. The client-side notification service is configured to i) transmit the provided job ID together with an IP address of the client apparatus to a server-side notification service of the print server via the network and ii) cause content of an event received from the server-side notification service to be displayed on a status monitor.

The print server includes a job address table and a server-side notification service. The job address table includes a field in which the IP address of the client apparatus is associated with the job ID. The server-side notification service is configured to i) register the job ID and the IP address received from the client-side notification service in the job address table, ii) receive content of an event transmitted from the image forming apparatus via the network, iii) read an IP address associated with a job ID included in the content of the event from the job address table when the event is a change in job status, and iv) transmit the content of the event to the client-side notification service of the client apparatus having the read IP address.

An image forming method according to an embodiment of the present disclosure is performed by a client apparatus that is coupled to a network, a print server that is coupled to the network, and an image forming apparatus that is coupled to the network. The client apparatus converts document data into print job data, generates a job ID of the print job data, transmits the print job data to the image forming apparatus via the print server, transmits the job ID together with an IP address of the client apparatus to the print server, and causes content of an event received from the print server to be displayed on a status monitor of the client apparatus. The print server registers the job ID and the IP address received from the client apparatus in the job address table, receives content of an event transmitted from the image forming apparatus, reads the IP address associated with the job ID included in the content of the event from the job address table when the event is a change in job status, and transmits the content of the event to the client apparatus having the read IP address.

Additional features and advantages are described herein, and will be apparent from the following Detailed Description and the figures.

### BRIEF DESCRIPTION OF THE FIGURES

In the accompanying drawings:
Fig. 1 is a schematic diagram illustrating the configuration of an image forming system according to a first embodiment of the present disclosure;
Fig. 2 is a block diagram illustrating the hardware configurations of a print server and an image forming apparatus in the image forming system;
Fig. 3 is a block diagram illustrating the functional configurations of a print server, a client apparatus, and an image forming apparatus, each of which are part of the image forming system;
Fig. 4A is a flowchart illustrating the operations of functional blocks in the client apparatus;
Fig. 4B is a flowchart illustrating the process of a client-side notification service in the client apparatus;
Fig. 5A is schematic diagram illustrating the configuration of a job address table;
Fig. 5B is a schematic diagram illustrating the configuration of an event table showing the relationship between a status code and the name of the status code;
Fig. 6 is a flowchart illustrating the process of a server-side notification service in the print server;
Fig. 7 is a block diagram illustrating the functional configurations of a print server, a client apparatus, and an image forming apparatus, each of which are part of an image forming system according to a second embodiment of the present disclosure; and
Fig. 8 is a block diagram illustrating the functional configurations of a print server, a client apparatus, and an image forming apparatus, each of which are part of an image forming system according to a third embodiment of the present disclosure.

### DETAILED DESCRIPTION

### I. First embodiment

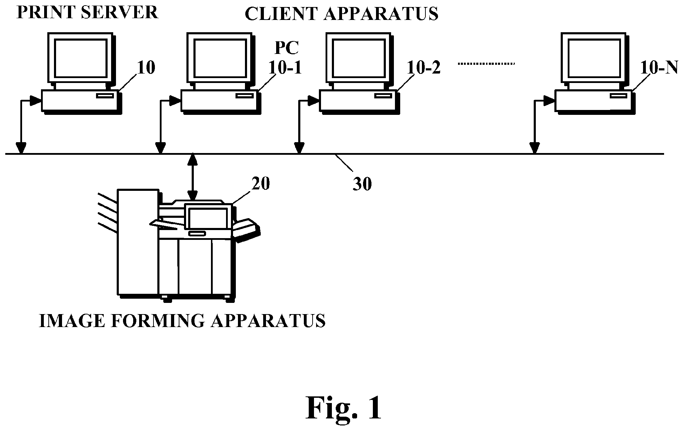

Fig. 1 is a schematic diagram illustrating the configuration of an image forming system according to a first embodiment of the present disclosure.

In the image forming system, (i) a print server 10 used as a manager computer and a print server, (ii) N client apparatus PCs 10-1 to 10-N, and (iii) an image forming apparatus 20 are coupled to one another via a network 30. The network is configured to cause the print server 10 to communicate with the image forming apparatus 20 and to cause the print server 10 to communicate with the client apparatus PCs 10-1 to 10-N.

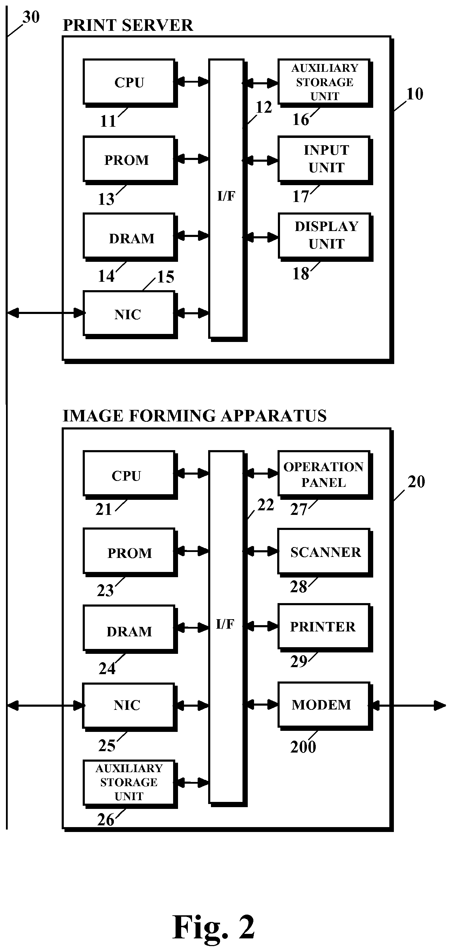

Fig. 2 is a block diagram illustrating the hardware configurations of the print server 10 and the image forming apparatus 20 that form part of the image forming system.

In the print server 10, a central processing unit (CPU) 11 is coupled to a programmable read only memory (PROM) 13, a dynamic random access memory (DRAM) 14, a network interface 15, an auxiliary storage unit 16, an input unit 17, and a display unit 18 via an interface 12. Multiple types of interfaces are represented as a single functional block 12. The hardware configurations of the client apparatus PCs 10-1 to 10-N are similar to the hardware configuration of the PC 10.

The PROM 13, which is, for example, a flash memory, stores a basic input/output system (BIOS). The DRAM 14 is used as the main memory. The auxiliary storage unit 16 stores an operating system (OS), various drivers, and applications that realize the functions of the manager computer and the print server. The input unit may include, for example, a keyboard and a pointing device.

In the image forming apparatus 20, a CPU 21 is coupled via an interface 22 to a PROM 23, a DRAM 24, a network interface 25, an auxiliary storage unit 26, an operation panel 27, a scanner 28, a printer 29, and a fax modem 200.

The PROM 23, which may be, for example, a flash memory, may store a BIOS, an OS, various drivers, and various applications that realize the various functions of the image forming apparatus. The DRAM 24 is used as the main memory. The auxiliary storage unit 26 stores print data, image data read by the scanner 28, document data received from the client apparatus PCs 10-1 to 10-N via the print server 10, and facsimile reception data as document files. The operation panel 27 includes an input unit and a display unit. The scanner 28 changes an image on a paper medium to an electronic image, and an electronic image file is used for printing, facsimile transmission, or file transmission. The printer 29 includes a print engine, a paper feed unit, a paper transport unit, and a paper output unit. Based on provided bitmap data generated in the DRAM 24, an electrostatic latent image is formed on a photoconductor drum. The electrostatic latent image is developed with toner, a toner image is transferred to paper and fixed thereon, and the paper is output.

The network interfaces 15 and 25 are coupled to the network 30.

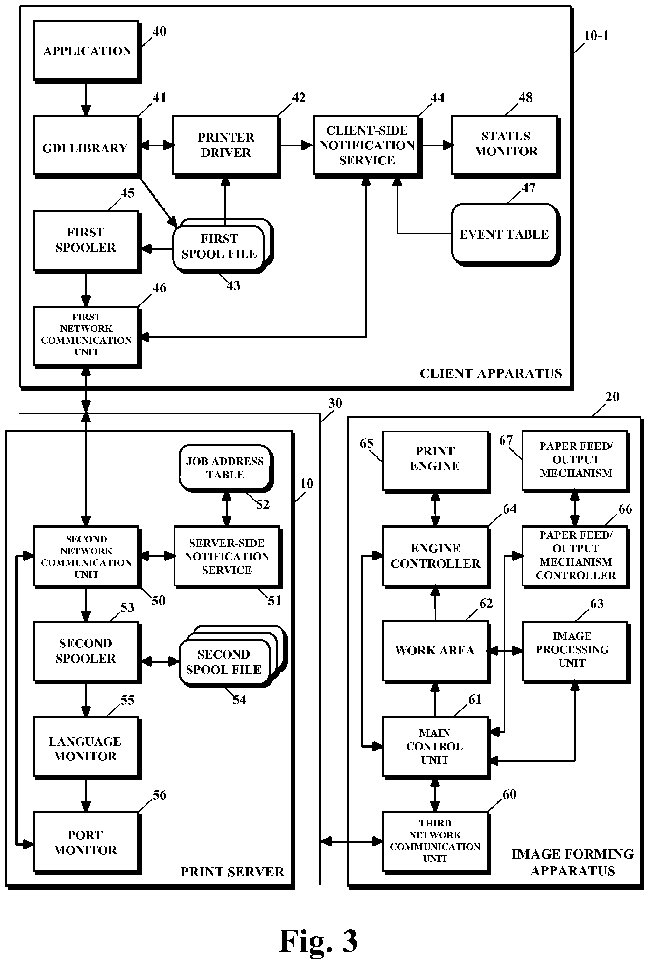

Fig. 3 is a block diagram illustrating the functional configurations of the print server 10, the client PC 10-1, and the image forming apparatus 20, each of which are part of the image forming system. The client PC 10-1 in this figure is also representative of the client PCs 10-2 to 10-N. The configurations of the PCs 10-2 to 10-N are similar to the configuration of the PC 10-1. In the description below, the OS is assumed to be Windows®.

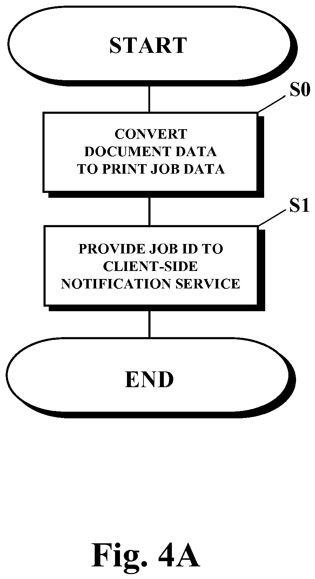

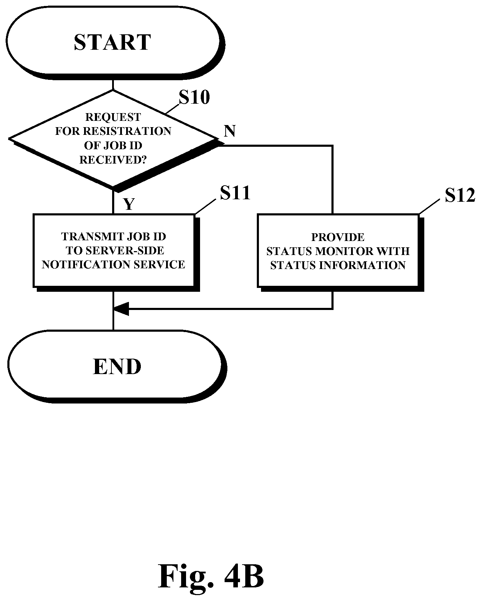

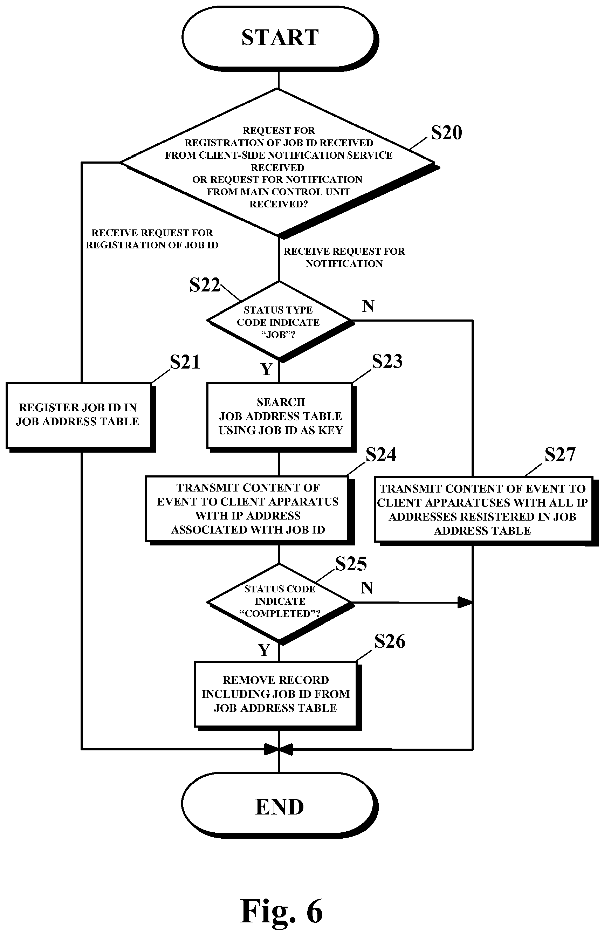

Each of the functional blocks illustrated in Fig. 3 and the operations thereof are now described with reference to the flowcharts illustrated in Figs. 4A and 4B and Fig. 6.

Fig. 4A is a flowchart illustrating the operations of functional blocks 40 to 42 in the client PC 10-1.

In step S0, an application 40 converts document data to print job data by calling a function within a Graphic Device Interface (GDI) library 41. At this time, a GDI function (i) converts GDI drawing data to page description language (PDL) data that can be interpreted by the image forming apparatus 20 and (ii) writes the data into a first spool file 43, both via a printer driver 42.

In step S1, the conversion process for a single job ends when the application 40 calls the EndDoc function within the GDI library 41. The printer driver 42 generates a globally unique identifier (GUID), and writes the GUID into the first spool file 43 as a job ID. The printer driver 42, by providing the job ID to a client-side notification service 44, requests registration of the job ID. The client-side notification service 44, which is a resident program, is activated by the OS at power-on of the client PC 10-1 and operates in the background so as to always receive input.

Fig. 4B is a flowchart illustrating the process of the client-side notification service 44.

In step S10, when the client-side notification service 44 receives a request for registration of a job ID, the flow proceeds to step S11; otherwise the flow proceeds to step S12 described later.

In step S11, the client-side notification service 44 transmits, together with the IP address of the client PC 10-1, the job ID to be registered to a server-side notification service 51 via a first network communication unit 46, the network 30, and a second network communication unit 50. The server-side notification service 51, which is a resident program similar to the client-side notification service 44, is activated by the OS at power-on of the client PC 10-1 and operates in the background so as to always receive input.

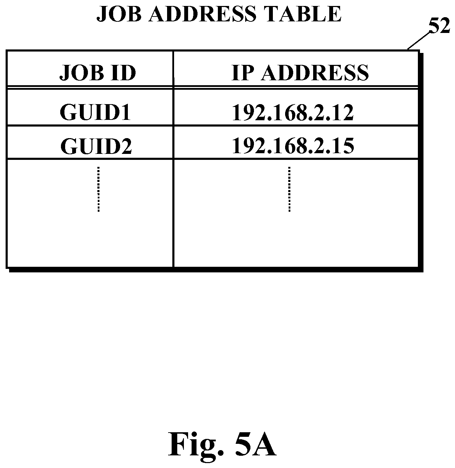

The server-side notification service 51, upon receipt of the job ID and the IP address, registers these as a single record in a job address table 52 illustrated in Fig. 5A.

Communication between the client-side notification service 44 and the server-side notification service 51 is performed using a Simple Object Access Protocol (SOAP) or a Simple Network Management Protocol (SNMP).

Here, the process of a job will be described. After the print job data is written into the first spool file 43, a first spooler 45 puts the identifier of the print job data in a queue. Every time an identifier is taken out from the head of the queue, the first spooler 45 supplies the first spool file 43 to a second spooler 53 via the first network communication unit 46 and the second network communication unit 50. Normally, the second spooler 53 causes a port monitor 56 to transmit (via a language monitor 55) second spool files 54 to the image forming apparatus 20 in the order in which they were spooled. The port monitor 56 transmits the second spool file 54 to a main control unit 61 via both the second network communication unit 50 and a third network communication unit 60.

Work area 62 includes a buffer area in which the main control unit 61 stores print job data that is included in the received second spool file 54. After storing print job data included in the received second spool file 54, the main control unit 61 develops the print job data into bitmap data using an image processing unit 63. The main control unit 61 prints an image based on the bitmap data by (i) supplying the developed bitmap data to a print engine 65 via an engine controller 64 and (ii) controlling a paper feed/output mechanism 67 via a paper feed/output mechanism controller 66.

When an error is generated in the print engine 65, the paper feed and output mechanism 67, or other portions of the image forming apparatus 20, the main control unit 61 transmits the content of the error as a status change event of the image forming apparatus 20 to the server-side notification service 51 via the third network communication unit 60 and the second network communication unit 50.

The content of an event includes a status code and, if the status code indicates a job status, a job ID.

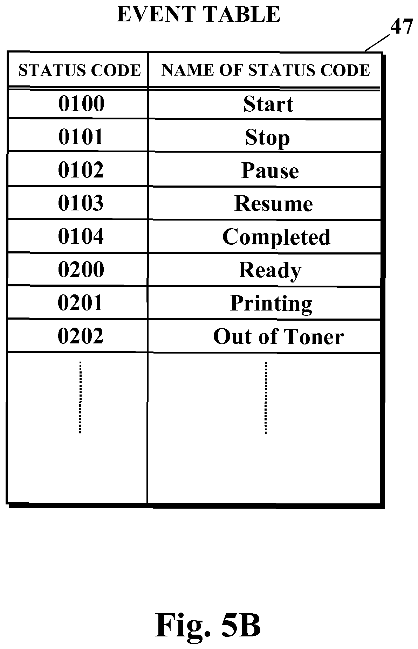

Fig. 5B is a schematic diagram illustrating the configuration of an event table 47 showing the relationship between a status code and the name of the status code. The two highest-order digits of the status code represent a status type code. For example, the two highest-order digits of the status code indicating "01" show that the type of status is a job. The two highest-order digits of the status code indicating "02" show that the type of status is an image forming apparatus. Further, for example, "Start", "Stop", "Pause", "Resume" and "Completed", which are the names of the status codes, respectively indicate the starting, stopping, pausing, resumption, and completion of a job.

Fig. 6 is a flowchart illustrating the process of the server-side notification service 51.

In step S20, the flow proceeds to step S21 when the server-side notification service 51 receives a request for registration of a job ID from the client-side notification service 44. In step S20, the flow proceeds to step S22 when the server-side notification service 51 receives a request for notification from the main control unit 61.

In step S22, when the status type code indicates a job ("01"), the flow proceeds to step S23. Otherwise, for example, when the status type code indicates an image forming apparatus ("02"), the flow proceeds to step S27.

In step S23, the server-side notification service 51 searches the job address table 52 using the job ID as the key.

In step S24, when a record is found in the search, the server-side notification service 51 transmits the content of the event, along with an IP address included in the record as the transmission address, to the client-side notification service 44 via the second network communication unit 50 and the first network communication unit 46.

In step S12 illustrated in Fig. 4B, the client-side notification service 44, after converting the status code included in the content of the event to the corresponding name by referring to the event table 47, provides a status monitor 48 with the name of the event together with the job ID and any other content, such as a toner level, included in the content of the event. As a result, the content displayed in a status display window (not illustrated) is updated. Note that when the status display window is not being displayed, the status display window is displayed as a popup window.

In step S25, when the status code indicates the completion of the job, the flow proceeds to step S26; otherwise, the process illustrated in Fig. 6 ends.

In step S26, the server-side notification service 51 (i) removes from the job address table 52 the record corresponding to the job ID and (ii) finishes the process illustrated in Fig. 6.

In step S27, the server-side notification service 51 transmits the content of the event to the client-side notification services 44 with all the IP addresses registered in the job address table 52 as the destination addresses.

As a result, a user can display only the job status of his/her own job on the status monitor 48. Further, the amount of communication traffic on the network 30 can be reduced.

### II. Second embodiment

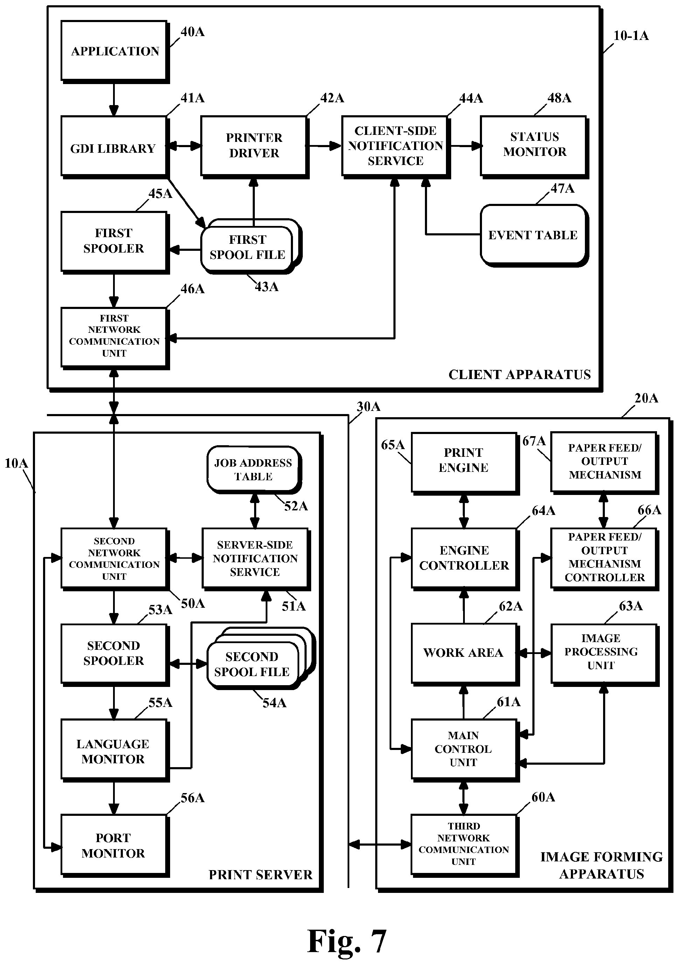

Fig. 7 is a block diagram illustrating the functional configurations of a print server 10A, a client apparatus 10-1A, and an image forming apparatus 20A, each of which are part of the image forming system according to a second embodiment of the present disclosure.

In the second embodiment, when an application 40A calls the EndDoc function within a GDI library 41A, conversion process for a single job ends. A printer driver 42A writes the IP address of the client apparatus 10-1A into a first spool file 43A using PJL (Printer Job Language). Step S10 and step S11 illustrated in Fig. 4B are not necessary.

A language monitor 55A, upon receipt of a second spool file 54A from a second spooler 53A, provides both a job ID and an IP address included in this file to a server-side notification service 51A and requests registration. The server-side notification service 51A registers, in the job address table 52 illustrated in Fig. 5A, a record including both the job ID and IP address.

The configurations and operations of other configuration blocks in the second embodiment are the same as those in the first embodiment.

### III. Third embodiment

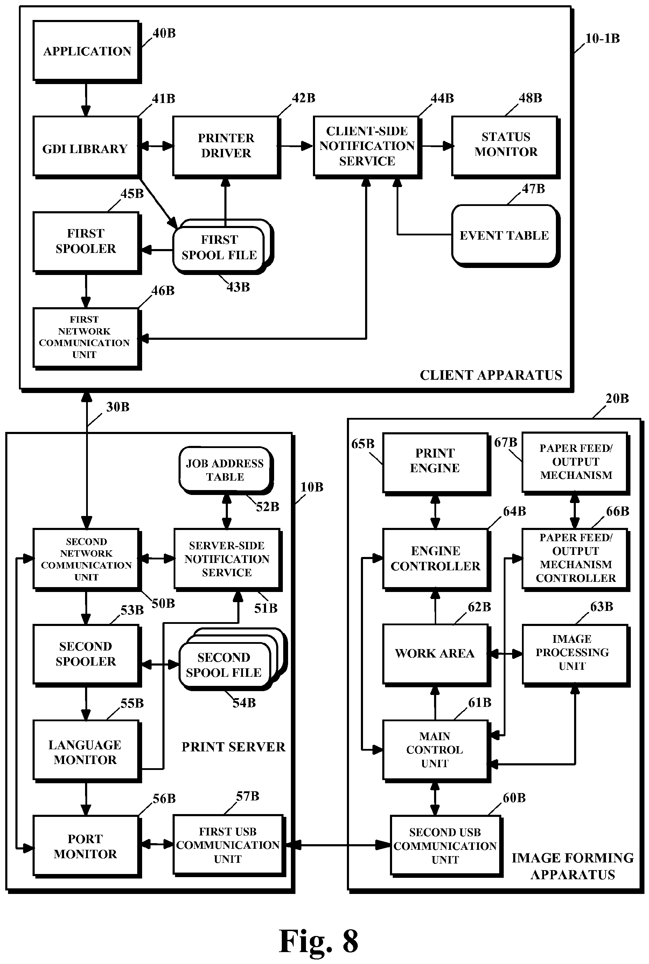

Fig. 8 is a block diagram illustrating the functional configurations of a print server 10B, a client apparatus 10-1B, and an image forming apparatus 20B, each of which are part of the image forming system, according to a third embodiment of the present disclosure.

In the third embodiment, the print server 10B includes a first USB communication unit 57B, and the image forming apparatus 20B includes a second USB communication unit 60B. With this configuration, the print server 10 and the image forming apparatus 20B are locally coupled to each other.

The configurations and operations of other configuration blocks in the third embodiment are the same as those in the first embodiment or the second embodiment. Note that the configuration of the image forming apparatus in the third embodiment is applicable to the image forming systems of the above-described first and second embodiments.

While various aspects and embodiments have been disclosed herein, other aspects and embodiments are possible. Other designs may be used in which the above-described components are each present.

In the first, second, and third embodiments, for example, a configuration may be employed in which the application 40 writes data into the spool file 43 in an Extended Meta File (EMF) format using the GDI library 41, and a printer driver provided in the spooler 53 converts EMF data into PDL data.

In the first embodiment, a configuration may be employed in which the language monitor 55 is omitted.

## Claims

1. An image forming system comprising:
a client apparatus (10-1) that is coupled to a network (30);
a print server (10) that is coupled to the network (30); and
an image forming apparatus (20) that is coupled to the network (30),
wherein the client apparatus (10-1) includes:
a status monitor (48) that displays a content of an event in the image forming apparatus (20);
a client-side notification service (44) ; and
a printer driver (42), and
wherein the print server (10) includes:
a server-side notification service (51) ; and a job address table (52) including a field in which the IP address of the client apparatus (10-1) is associated with a job ID as a single record,
wherein the printer driver (42) is configured to
i) convert (S0) document data into print job data,
ii) generate a job ID of the print job data,
iii) provide (S1) the job ID to the client-side notification service (44) of the client apparatus (10-1), and
iv) transmit the print job data to the image forming apparatus (20) via the print server (10); and
wherein the client-side notification service (44) is configured to
i) transmit (S11) the provided job ID together with an IP address of the client apparatus (10-1) to the server-side notification service (51) of the print server (10) via the network (30) and
ii) cause (S12) the content of an event received from the server-side notification service (51) to be displayed on the status monitor (48),
wherein the server-side notification service (51) is configured to
i) register (S21) the job ID and the IP address received from the client-side notification service (44) in the job address table (52),
ii) receive the content of an event including a status code transmitted from the image forming apparatus (20) via the network (30), wherein the content of the event further includes the job ID, if the status code indicates a job status, which includes one of "Start", "Stop", "Pause", "Resume", and "Completed",
iii) read the IP address associated with the job ID included in the content of the event from the job address table (52) and transmit (S24) the content of the event to the client-side notification service (44) of the client apparatus (10-1) having the read IP address, if the status code indicates the job status, and
transmit the content of the event to the client-side notification services (44) of all the clients with IP addresses registered in the job address table (52), if the status code does not indicate a job status but an image forming apparatus status, which includes one of "Ready, "Printing", and "Out of Toner", and wherein the generation of the job ID comprises generating a globally unique identifier (GUID) and writing the GUID into a spool file (43) as the job ID.

2. The image forming system according to Claim 1,
wherein, when the event is completion of the print job, the server-side notification service (51) is further configured to delete (S26) a record that includes the job ID of the print job and the IP address associated with the job ID from the job address table (52).

3. The image forming system according to Claim 1,
wherein the client apparatus (10-1) further includes a first spooler (45) and the print server (10) further includes a second spooler (53),
wherein the first spooler (45), when writing of the print job data into the spool file (43) is completed, is configured to put an identifier of the print job data into a queue and supply the spool file (43) to the second spooler (53) every time the identifier is acquired from a head of the queue.

4. The image forming system according to Claim 3,
wherein the print server (10) further includes a language monitor (55) and a port monitor (56), and
wherein the second spooler (53) is configured to cause the spool file (43) to be transmitted to the port monitor (56) via the language monitor (55) in the spooling order.

5. The image forming system according to Claim 4,
wherein the printer driver (42) is further configured to write the IP address of the client apparatus (10-1) into the spool file (43), and
wherein the language monitor (55) is configured to acquire the job ID and the IP address from the print job data and provide the job ID and the IP address to the server-side notification service (51).

6. The image forming system according to Claim 1,
wherein the image forming apparatus (20) is locally coupled to the print server (10), and the client apparatus (10-1) and the print server (10) are coupled to each other via the network (30).

7. The image forming system according to Claim 1,
wherein communication between the client-side notification service (44) and the server-side notification service (51) is performed using a Simple Object Access Protocol (SOAP).

8. The image forming system according to Claim 1,
wherein converting the document data into the print job data comprises calling a function within a Graphic Device Interface (GDI) library (41).

9. An image forming method using a client apparatus (10-1) that is coupled to a network (30), a print server (10) that is coupled to the network (30), and an image forming apparatus (20) that is coupled to the network (30), the method comprising:
the client apparatus (10-1) converting (S0) document data into print job data;
the client apparatus (10-1) generating a job ID of the print job data;
the client apparatus (10-1) transmitting the print job data to the image forming apparatus (20) via the print server (10);
the client apparatus (10-1) transmitting (S11) the job ID together with an IP address of the client apparatus (10-1) to the print server (10);
the print server (10) registering (S21) the job ID and the IP address received from the client apparatus (10-1) as a single record in a job address table (52);
the print server (10) receiving the content of an event including a status code transmitted from the image forming apparatus (20);
if the status code indicates a job status including one of "Start", "Stop", "Pause", "Resume", and "Completed", the print server (10) receiving the job ID included in the content of the event, reading the IP address associated with the job ID from the job address table (52) and transmitting (S24) the content of the event to the client apparatus (10-1) having the read IP address,
if the status code does not indicate a job status but an image forming apparatus status including one of "Ready, "Printing", and "Out of Toner", the print server (10) transmitting the content of the event to all the client apparatuses (10-1; 10-2; 10-3; 10-N) with all IP addresses registered in the job address table (52);
the client apparatus (10-1) causing (S12) content of an event received from the print server (10) to be displayed on a status monitor (48) of the client apparatus (10-1); wherein generating the job ID comprises generating a globally unique identifier (GUID) and writing the GUID into a spool file (43) as the job ID.

10. The image forming method according to Claim 9, further comprising: via the print server (10), deleting (S26), when the event is completion of the print job, a record that includes the job ID of the print job and the IP address associated with the job ID from the job address table (52).

11. The image forming method according to Claim 9, further comprising:
via the client apparatus (10-1),
putting, when writing of the print job data into the spool file (43) is completed, an identifier of the print job data into a queue; and
supplying the spool file (43) to a second spooler (53) of the print server (10) every time the identifier is acquired from a head of the queue.

12. The image forming method according to Claim 11, further comprising:
via the client apparatus (10-1),
writing the IP address of the client apparatus (10-1) into the spool file (43) using a printer job language (PJL); and
via the print server (10),
acquiring the job ID and the IP address from the print job data.

13. The image forming method according to Claim 9,
wherein the image forming apparatus (20) is locally coupled to the print server (10), and the client apparatus (10-1) and the print server (10) are coupled to each other via the network (30).

14. The image forming method according to Claim 9, further comprising: wherein communication between the client apparatus (10-1) and the print server (10) is performed using a Simple Object Access Protocol (SOAP).

15. The image forming method according to Claim 9,
wherein converting the document data into the print job data comprises calling a function within a Graphic Device Interface (GDI) library (41).

16. The image forming method according to Claim 15,
wherein calling the function within the GDI library (41) comprises converting GDI drawing data to page description language (PDL) data that can be interpreted by the image forming apparatus (20).

## Patentansprüche

1. Bilderzeugungssystem mit:
einem Clientgerät (10-1), das mit einem Netzwerk (30) gekoppelt ist;
einem Druckserver (10), der mit dem Netzwerk (30) gekoppelt ist; und
einem Bilderzeugungsgerät (20), das mit dem Netzwerk (30) gekoppelt ist,
wobei das Clientgerät (10-1) Folgendes aufweist:
einen Statusmonitor (48), der einen Inhalt eines Ereignisses in dem Bilderzeugungsgerät (20) anzeigt;
einen clientseitigen Mitteilungsdienst (44); und
einen Druckertreiber (42), und
wobei der Druckserver (10) Folgendes aufweist:
einen serverseitigen Mitteilungsdienst (51); und
eine Jobadressentabelle (52) einschließlich eines Feldes, in dem die IP-Adresse des Clientgerätes (10-1) mit einer Job-ID als eine einzige Aufzeichnung verknüpft ist,
wobei der Druckertreiber (42) dazu konfiguriert ist,
i) Dokumentendaten zu Druckjobdaten zu wandeln (S0),
ii) eine Job-ID der Druckjobdaten zu erzeugen,
iii) die Job-ID für den clientseitigen Mitteilungsdienst (44) des Clientgeräts (10-1) bereitzustellen (S1), und
iv) die Druckjobdaten zu dem Bilderzeugungsgerät (20) über den Druckserver (10) zu übertragen; und
wobei der clientseitige Mitteilungsdienst (44) dazu konfiguriert ist,
i) die bereitgestellte Job-ID zusammen mit einer IP-Adresse des Clientgerätes (10-1) zu dem serverseitigen Mitteilungsdienst (51) des Druckservers (10) über das Netzwerk (30) zu übertragen (S11) und
ii) den Inhalt eines Ereignisses, der von dem serverseitigen Mitteilungsdienst (51) aufgenommen ist, zum Anzeigen an dem Statusmonitor (48) zu veranlassen (S12),
wobei der serverseitige Mitteilungsdienst (51) dazu konfiguriert ist,
i) die Job-ID und die IP-Adresse, die von dem clientseitigen Mitteilungsdienst (44) aufgenommen wurden, in der Jobadressentabelle (52) zu registrieren (S21),
ii) den Inhalt eines Ereignisses einschließlich eines Statuscodes aufzunehmen, der von dem Bilderzeugungsgerät (20) über das Netzwerk (30) übertragen ist, wobei der Inhalt des Ereignisses des Weiteren die Job-ID enthält, falls der Statuscode einen Jobstatus angibt, der entweder "Start", "Stopp", "Pause", "Wiederaufnehmen" oder "Beendet" enthält,
iii) die IP-Adresse, die mit der in dem Inhalt des Ereignisses enthaltenen Job-ID verknüpft ist, aus der Jobadressentabelle (52) zu lesen und den Inhalt des Ereignisses zu dem clientseitigen Mitteilungsdienst (44) des Clientgerätes (10-1) zu übertragen (S24), das die gelesene IP-Adresse hat, falls der Statuscode den Jobstatus angibt, und
den Inhalt des Ereignisses zu den clientseitigen Mitteilungsdiensten (44) von allen Clients mit IP-Adressen zu übertragen, die in der Jobadressentabelle (52) registriert sind, falls der Statuscode nicht einen Jobstatus sondern einen Bilderzeugungsgerätestatus angibt, der entweder "Bereit", "Drucken" oder "Toner aus" enthält, und
wobei die Erzeugung der Job-ID ein Erzeugen eines global eindeutigen Identifikators (GUID) und ein Schreiben des GUID in eine Pufferdatei (43) als die Job-ID aufweist.

2. Bilderzeugungssystem gemäß Anspruch 1,
wobei, wenn das Ereignis eine Beendigung des Druckjobs ist, der serverseitige Mitteilungsdienst (51) des Weiteren dazu konfiguriert ist, aus der Jobadressentabelle (52) eine Aufzeichnung zu löschen (S26), die die Job-ID des Druckjobs und die mit der Job-ID verknüpfte IP-Adresse enthält.

3. Bilderzeugungssystem gemäß Anspruch 1,
wobei das Clientgerät (10-1) des Weiteren einen ersten Puffer (45) aufweist und der Druckserver (10) des Weiteren einen zweiten Puffer (53) aufweist,
wobei der erste Puffer (45), wenn ein Schreiben der Druckjobdaten in die Pufferdatei (43) beendet ist, dazu konfiguriert ist, einen Identifikator der Druckjobdaten in eine Warteschlange zu setzen und die Pufferdatei (43) zu dem zweiten Puffer (53) jedes Mal dann zuzuführen, wenn der Identifikator aus einem Kopf der Warteschlange akquiriert wird.

4. Bilderzeugungssystem gemäß Anspruch 3,
wobei der Druckserver (10) des Weiteren einen Sprachmonitor (55) und einen Portmonitor (56) aufweist, und
wobei der zweite Puffer (53) dazu konfiguriert ist, ein Übertragen der Pufferdatei (43) zu dem Portmonitor (56) über den Sprachmonitor (55) in der Pufferreihenfolge zu veranlassen.

5. Bilderzeugungssystem gemäß Anspruch 4,
wobei der Druckertreiber (42) des Weiteren dazu konfiguriert ist, die IP-Adresse des Clientgerätes (10-1) in die Pufferdatei (43) zu schreiben, und
wobei der Sprachmonitor (55) dazu konfiguriert ist, die Job-ID und die IP-Adresse aus den Druckjobdaten zu akquirieren und die Job-ID und die IP-Adresse für den serverseitigen Mitteilungsdienst (51) bereitzustellen.

6. Bilderzeugungssystem gemäß Anspruch 1,
wobei das Bilderzeugungsgerät (20) lokal an den Druckserver (10) gekoppelt ist und das Clientgerät (10-1) und der Druckserver (10) über das Netzwerk (30) miteinander gekoppelt sind.

7. Bilderzeugungssystem gemäß Anspruch 1,
wobei eine Kommunikation zwischen dem clientseitigen Mitteilungsdienst (44) und dem serverseitigen Mitteilungsdienst (51) unter Verwendung eines Simple-Objekt-Access-Protokolls (SOAP) bewirkt wird.

8. Bilderzeugungssystem gemäß Anspruch 1,
wobei ein Wandeln der Dokumentendaten zu den Druckjobdaten ein Aufrufen einer Funktion innerhalb einer Graphic-Device-Interface-(GDI)-Bibliothek (41) aufweist.

9. Bilderzeugungsverfahren unter Verwendung eines Clientgerätes (10-1), das mit einem Netzwerk (30) gekoppelt ist, eines Druckservers (10), der mit dem Netzwerk (30) gekoppelt ist, und eines Bilderzeugungsgeräts (20), das mit dem Netzwerk (30) gekoppelt ist, wobei das Verfahren Folgendes aufweist:
das Clientgerät (10-1) wandelt Dokumentendaten zu Druckjobdaten (S0);
das Clientgerät (10-1) erzeugt eine Job-ID der Druckjobdaten;
das Clientgerät (10-1) überträgt die Druckjobdaten zu dem Bilderzeugungsgerät (20) über den Druckserver (10);
das Clientgerät (10-1) überträgt die Job-ID zusammen mit einer IP-Adresse des Clientgerätes (10-1) zu dem Druckserver (10) (S11);
der Druckserver (10) registriert die Job-ID und die IP-Adresse, die von dem Clientgerät (10-1) aufgenommen werden, als eine einzige Aufzeichnung in einer Jobadressentabelle (52) (S21);
der Druckserver (10) nimmt den Inhalt eines Ereignisses einschließlich eines von dem Bilderzeugungsgerät (20) übertragenen Statuscodes auf;
falls der Statuscode einen Jobstatus angibt, der entweder "Start", "Stopp", "Pause", "Wiederaufnehmen" oder "Beendet" enthält, nimmt der Druckserver (10) die in dem Inhalt des Ereignisses enthaltene Job-ID auf, liest die IP-Adresse, die mit der Job-ID verknüpft ist, aus der Jobadressentabelle (52) und überträgt den Inhalt des Ereignisses zu dem Clientgerät (10-1), das die gelesene IP-Adresse hat (S24),
falls der Statuscode nicht einen Jobstatus sondern einen Bilderzeugungsgerätestatus angibt, der entweder "Bereit", "Drucken" oder "Toner aus" aufweist, überträgt der Druckserver (10) den Inhalt des Ereignisses zu allen Clientgeräten (10-1; 10-2; 10-3; 10-N) mit allen IP-Adressen, die in der Jobadressentabelle (52) registriert sind;
das Clientgerät (10-1) veranlasst ein Anzeigen eines Inhaltes eines Ereignisses, der von dem Druckserver (10) aufgenommen wird, an einem Statusmonitor (48) des Clientgerätes (10-1) (S12); wobei
ein Erzeugen der Job-ID ein Erzeugen eines global eindeutigen Identifikators (GUID) und ein Schreiben des GUID in eine Pufferdatei (43) als die Job-ID aufweist.

10. Bilderzeugungsverfahren gemäß Anspruch 9, des Weiteren mit Folgendem über den Druckserver (10):
wenn das Ereignis eine Beendigung des Druckjobs ist, Löschen (S26) einer Aufzeichnung, die die Job-ID des Druckjobs und die mit der Job-ID verknüpfte IP-Adresse enthält, aus der Jobadressentabelle (52).

11. Bilderzeugungsverfahren gemäß Anspruch 9, des Weiteren mit Folgendem über das Clientgerät (10-1):
wenn ein Schreiben der Druckjobdaten in die Pufferdatei (43) beendet ist,
Setzen eines Identifikators der Druckjobdaten in eine Warteschlange, und
Zuführen der Pufferdatei (43) zu einem zweiten Puffer (53) des Druckservers (10) jedes Mal dann, wenn der Identifikator aus einem Kopf der Warteschlange akquiriert wird.

12. Bilderzeugungsverfahren gemäß Anspruch 11, des Weiteren mit:
Schreiben der IP-Adresse des Clientgerätes (10-1) in die Pufferdatei (43) unter Verwendung einer Druckerjobsprache (PJL) über das Clientgerät (10-1); und
Akquirieren der Job-ID und der IP-Adresse aus den Druckjobdaten über den Druckserver (10).

13. Bilderzeugungsverfahren gemäß Anspruch 9,
wobei das Bilderzeugungsgerät (20) lokal an den Druckserver (10) gekoppelt ist und das Clientgerät (10-1) und der Druckserver (10) über das Netzwerk (30) miteinander gekoppelt sind.

14. Bilderzeugungsverfahren gemäß Anspruch 9, des Weiteren mit: wobei eine Kommunikation zwischen dem Clientgerät (10-1) und dem Druckserver (10) unter Verwendung eines Simple-Object-Access-Protokolls (SOAP) bewirkt wird.

15. Bilderzeugungsverfahren gemäß Anspruch 9,
wobei ein Wandeln der Dokumentendaten zu den Druckjobdaten ein Aufrufen einer Funktion innerhalb einer Graphic-Device-Interface-(GDI)-Bibliothek (41) aufweist.

16. Bilderzeugungsverfahren gemäß Anspruch 15,
wobei ein Aufrufen der Funktion innerhalb der GDI-Bibliothek (41) ein Wandeln von GDI-Zeichnungsdaten zu Page-Description-Language-(PDL)-Daten aufweist, die durch das Bilderzeugungsgerät (20) interpretiert werden können.

## Revendications

1. Système de formation d'images comprenant :
un appareil client (10-1) qui est couplé à un réseau (30),
un serveur d'impression (10) qui est couplé au réseau (30), et
un appareil de formation d'images (20) qui est couplé au réseau (30),
l'appareil client (10-1) incluant :
un moniteur d'état (48) qui affiche un contenu d'un événement dans l'appareil de formation d'images (20),
un service de notification côté client (44) et
un pilote d'imprimante (42), et
le serveur d'impression (10) incluant :
un service de notification côté serveur (51), et
un tableau d'adresses de tâches (52) incluant un champ, dans lequel l'adresse IP de l'appareil client (10-1) est associée à un identifiant de tâche sous la forme d'un unique enregistrement,
le pilote d'imprimante (42) étant configuré pour
(i) convertir (S0) des données de document en données de tâche d'impression,
(ii) générer un identifiant de tâche des données de tâche d'impression,
(iii) fournir (S1) l'identifiant de tâche au service de notification côté client (44) de l'appareil client (10-1), et
(iv) transmettre les données de tâche d'impression à l'appareil de formation d'image (20) via le serveur d'impression (10), et
le service de notification côté client (44) étant configuré pour
(i) transmettre (S11) l'identifiant de tâche fourni avec une adresse IP de l'appareil client (10-1) au service de notification côté serveur (51) du serveur d'impression (10) via le réseau (30) et
(ii) amener (S12) le contenu d'un événement reçu par le service de notification côté serveur (51) à s'afficher sur le moniteur d'état (48),
le service de notification côté serveur (51) étant configuré pour
(i) enregistrer (S21) l'identifiant de tâche et l'adresse IP reçus du service de notification côté client (44) dans le tableau des adresses de tâches (52),
(ii) recevoir le contenu d'un événement incluant un code d'état transmis par l'appareil de formation d'images (20) via le réseau (30), le contenu de l'événement incluant en plus l'identifiant de tâche, si le code d'état indique un état de tâche, qui inclut un parmi les suivants « Démarrage », « Interruption », « Pause », « Reprise » et « Achevé »,
(iii) lire l'adresse IP associée à l'identifiant de tâche inclus dans le contenu de l'événement du tableau d'adresses de tâches (52) et transmettre (S24) le contenu de l'événement au service de notification côté client (44) de l'appareil client (10-1) ayant l'adresse IP lue, si le code d'état indique un état de tâche, et transmettre le contenu de l'événement au service de notification côté client (44) de tous les clients, dont les adresses IP sont enregistrées dans le tableau d'adresses de tâches (52), si le code d'état n'indique pas un état de tâche, mais un état d'appareil de formation d'image qui inclut un état parmi les suivants : « Prêt », « Impression » et « Rupture de toner », et
la génération de l'identifiant de tâche comprenant la génération d'un identifiant globalement unique (GUID) et l'écriture du GUID dans un fichier spool (43) en tant qu'identifiant de tâche.

2. Système de formation d'image suivant la revendication 1,
dans lequel, lorsque l'événement est l'achèvement de la tâche d'impression, le service de notification côté serveur (51) est en plus configuré pour supprimer (S26) un enregistrement qui inclut l'identifiant de tâche de la tâche d'impression et l'adresse IP associée à l'identifiant de tâche dans le tableau d'adresses de tâches (52).

3. Système de formation d'image suivant la revendication 1,
dans lequel l'appareil client (10-1) inclut en plus un premier spooleur (45) et le serveur d'impression (10) inclut en plus un second spooleur (53),
le premier spooleur (45) étant configuré, une fois que l'écriture des données de tâche d'impression dans le fichier spool (43) est achevé, pour placer un identifiant des données de tâche d'impression dans une file d'attente et livrer le fichier spool (43) au second spooleur (53) à chaque fois que l'identifiant est acquis à partir d'une tête de file d'attente.

4. Système de formation d'image suivant la revendication 3,
dans lequel le serveur d'impression (10) inclut en plus un moniteur de langue (55) et un moniteur de port (56), et
dans lequel le second spooleur (53) est configuré pour amener le fichier spool (43) à être transmis au moniteur de port (56) via le moniteur de langue (55) dans l'ordre du spooling.

5. Système de formation d'image suivant la revendication 4,
dans lequel le pilote d'imprimante (42) est en plus configuré pour écrire l'adresse IP de l'appareil client (10-1) dans le fichier spool (43), et
dans lequel le moniteur de langue (55) est configuré pour acquérir l'identifiant de tâche et l'adresse IP à partir des données de tâche d'impression et fournir l'identifiant de tâche et l'adresse IP au service de notification côté serveur (51).

6. Système de formation d'image suivant la revendication 1,
dans lequel l'appareil de formation d'image (20) est couplé localement au serveur d'impression (10) et l'appareil client (10-1) et le serveur d'impression (10) sont couplés l'un à l'autre via le réseau (30).

7. Système de formation d'image suivant la revendication 1,
dans lequel la communication entre le service de notification côté client (44) et le service de notification côté serveur (51) a lieu en utilisant un protocole d'accès à objet simple (SOAP).

8. Système de formation d'image suivant la revendication 1,
dans lequel la conversion des données de document en données de tâche d'impression comprend l'appel d'une fonction dans une librairie d'interface de dispositif graphique (GDI) (41).

9. Procédé de formation d'image utilisant un appareil client (10-1) qui est couplé à un réseau (30), un serveur d'impression (10) qui est couplé au réseau (30), et un appareil de formation d'image (20) qui est couple au réseau (30), le procédé comprenant les étapes suivantes, au cours desquelles :
l'appareil client (10-1) convertit (S0) des données de document en données de tâche d'impression,
l'appareil client (10-1) génère un identifiant de tâche des données de tâche d'impression,
l'appareil client (10-1) transmet les données de tâche d'impression à l'appareil de formation d'image (20) via le serveur d'impression (10),
l'appareil client (10-1) transmet (S11) l'identifiant de tâche avec une adresse IP de l'appareil client (10-1) au serveur d'impression (10),
le serveur d'impression (10) enregistre (S21) l'identifiant de tâche et l'adresse IP reçus de l'appareil client (10-1) sous la forme d'un unique enregistrement dans un tableau d'adresses de tâches (52),
le serveur d'impression (10) reçoit le contenu d'un événement incluant un code d'état transmis depuis l'appareil de formation d'image (20),
si le code d'état indique un état de tâche incluant un état parmi les suivants « Démarrage », « Arrêt », « Pause », « Reprise » et Achevé », le serveur d'impression (10) reçoit l'identifiant de tâche inclus dans le contenu de l'événement, lit l'adresse IP associée à l'identifiant de tâche dans le tableau d'adresses de tâches (52) et transmet (S24) le contenu de l'événement à l'appareil client (10-1) ayant l'adresse IP lue,
si le code d'état n'indique pas un état de tâche, mais un état d'appareil de formation d'image incluant un état parmi les suivants « Prêt », « Impression », et « en Rupture de Toner », le serveur d'impression (10) transmet le contenu de l'événement à tous les appareils client (10-1, 10-2, 10-3, 10-N) avec toutes les adresses IP enregistrées dans le tableau d'adresses de tâches (52),
l'appareil client (10-1) amenant (S12) un contenu d'un événement reçu depuis le serveur d'impression (10) à s'afficher sur un moniteur d'état (48) de l'appareil client (10-1), la génération de l'identifiant de tâche comprenant la génération d'un identifiant globalement unique GUID et l'écriture du GUID dans un fichier spool (43) comme identifiant de tâche.

10. Procédé de formation d'image suivant la revendication 9, le procédé comprenant en plus : via le serveur d'impression (10),
la suppression (S26), lorsque l'événement est l'achèvement de la tâche d'impression, d'un enregistrement qui inclut l'identifiant de tâche de la tâche d'impression et l'adresse IP associée à l'identifiant de tâche dans le tableau d'adresses de tâches (52).

11. Procédé de formation d'image suivant la revendication 9, le procédé comprenant en plus : via l'appareil client (10-1),
la mise dans une file d'attente d'un identifiant de la tâche d'impression, lorsque l'écriture des données de tâche d'impression dans le fichier spool (43) est achevée, et
la fourniture du fichier spool (43) à un second spooleur (53) du serveur d'impression (10) à chaque fois que l'identifiant est acquis à partir d'une tête de la queue.

12. Procédé de formation d'image suivant la revendication 11, le procédé comprenant en plus : via l'appareil client (10-1) ;
l'écriture de l'adresse IP de l'appareil client (10-1) dans le fichier spool (43) en utilisant un langage de tâche d'impression (PJL), et
via le serveur d'impression (10),
l'acquisition de l'identifiant de tâche et de l'adresse IP à partir des données de tâche d'impression.

13. Procédé de formation d'image suivant la revendication 9,
dans lequel l'appareil de formation d'image (20) est localement couplé au serveur d'impression (10) et l'appareil client (10-1) et le serveur d'impression sont couplés l'un à l'autre via le réseau (30).

14. Procédé de formation d'image suivant la revendication 9,
dans lequel la communication entre l'appareil client (10-1) et le serveur d'impression (10) a lieu en utilisant un protocole d'accès à objet simple (SOAP).

15. Procédé de formation d'image suivant la revendication 9,
dans lequel la conversion des données de document en données de tâche d'impression comprend l'appel d'une fonction dans une librairie (41) d'interface de dispositif graphique (GDI).

16. Procédé de formation d'image suivant la revendication 15,
dans lequel l'appel de la fonction dans la librairie d'interface de dispositif graphique (41) comprend la conversion de données de dessin GDI en données de langage de description de page (PDL) qui peuvent être interprétées par l'appareil de formation d'image (20).
